# FASCICULE DE BREVET EUROPEEN

(11) **EP 0 852 039 B1**
(45) Date de publication et mention de la délivrance du brevet: **03.11.1999**
(21) Numéro de dépôt: 96931865.8
(22) Date de dépôt: 18.09.1996
(51) Int. Cl.: G06K 19/077

(54) **PROCEDE DE STOCKAGE D'UNE PLURALITE DE CARTES A MEMOIRE ELECTRONIQUE**
VERFAHREN ZUM LAGERN VON MEHREREN ELEKTRONISCHEN SPEICHERKARTEN
METHOD FOR STORING A PLURALITY OF ELECTRONIC SMART CARDS

(30) Priorité: 19.09.1995 FR 9511077
(43) Date de publication de la demande: 08.07.1998
(73) Titulaire: SCHLUMBERGER Systèmes, 92120 Montrouge (FR)
(72) Inventeur: FANE, Madjide, 75019 Paris (FR)
(86) Numéro de dépôt international: FR9601447
(87) Numéro de publication internationale: WO9711438

(56) Documents cités:
- FR-A- 2 244 691
- FR-A- 2 399 375
- IBM TECHNICAL DISCLOSURE BULLETIN, vol. 15, no. 5, Octobre 1992, pages 1420-1421, XP002004852 "card stacker"

## Description

La présente invention concerne un procédé de stockage d'une pluralité de cartes à mémoire électronique.

L'invention trouve une application particulièrement avantageuse dans le domaine de la fabrication des cartes à mémoire électronique.

De telles cartes résultent actuellement d'un procédé de fabrication dans lequel un module électronique, constitué principalement d'une pastille semi-conductrice disposée sur un support muni de contacts électriques, est placé dans une cavité aménagée sur la face recto d'un corps de carte et fixé au moyen d'une colle, par exemple à base de cyanoacrylate. Les cartes ainsi fabriquées sont généralement empilées de telle sorte que la face recto de l'une soit au contact de la face recto d'une autre.

Cependant, on constate souvent une certaine altération des cartes lorsque celles-ci sont rangées de cette manière immédiatement après l'opération de collage du module électronique dans la cavité du corps de carte. L'altération observée se situe sur une portion de la face verso de chaque carte placée contre la face recto portant le module électronique de la carte voisine et affecte, selon le cas, le vernis de protection transparent du corps de carte, la couche plastique transparente de protection ou l'encre imprimée elle-même.

Cette altération est supposée résulter du dégazage de la colle utilisée et peut se prolonger pendant plusieurs jours. Elle peut être sans conséquence lorsqu'elle concerne des cartes dépourvues de graphisme au verso. Par contre, l'altération n'est pas acceptable lorsqu'elle concerne des cartes portant sur chacune de leurs faces un décor personnalisé qui confère auxdites cartes une forte plus-value esthétique.

Le rangement des cartes par simple empilement a pour but de faciliter une opération ultérieure, par exemple la manutention, le stockage, l'expédition ou un traitement supplémentaire. Chez l'utilisateur notamment, les cartes peuvent subir une opération de personnalisation telle que marquage ou collage de pistes magnétiques. Il est alors nécessaire que les cartes soient livrées sous forme regroupée les unes contre les autres car elles doivent être présentées ainsi pour le traitement.

Une solution à l'altération des cartes qui consisterait à changer soit le vernis ou la couche de protection, soit la colle, n'est pas souhaitable. En effet, le choix actuel de chacun de ces constituants résulte déjà d'un compromis optimal de leurs propriétés et avantages respectifs : la colle pour son efficacité notamment, le vernis ou la couche de protection pour un ensemble de propriétés, en particulier la capacité de dispersion électrostatique, d'accrochage de la piste magnétique et la résistance aux rayures.

Une autre solution permettant d'éviter la détérioration des cartes pourrait consister à différer leur rangement pendant un certain temps ou à les ranger provisoirement dans un chargeur dans lequel les cartes seraient maintenues éloignées les unes des autres. Ces solutions ne sont cependant pas satisfaisantes car la durée du dégazage est relativement longue. pouvant aller jusqu'à plusieurs jours. De plus, elles sont incompatibles avec les délais de livraison, nécessitant des volumes de stockage importants, et provoquent une immobilisation des encours de fabrication.

Un autre inconvénient du recours au chargeur est de gêner les opérations ultérieures dans la mesure où l'on doit manipuler les cartes une à une pour les regrouper en vue d'un traitement en série. Ce traitement ultérieur peut être effectué soit dans l'usine, soit chez le client. Il comprend toutes sortes d'opérations telles que l'emballage en sachets individuels ou la personnalisation chez l'utlisateur.

Aussi, le problème technique à résoudre par l'objet de la présente invention est de proposer un procédé de stockage d'une pluralité de cartes à mémoire électronique comportant, chacune, d'une part, un corps de carte présentant une face recto et une face verso, et, d'autre pat, un module électronique disposé dans une cavité aménagée sur la face recto dudit corps de carte, procédé qui permettrait d'éviter les inconvénients mentionnés ci-dessus en empêchant l'altération des cartes à mémoire dans le processus de fabrication et en facilitant les opérations ultérieures.

La solution au problème technique posé est obtenue, selon la présente invention, du fait que ledit procédé consiste à empiler lesdites cartes consécutivement selon P orientations différentes, d'une manière telle que le module électronique d'une carte de rang n soit placé en regard de la face verso de la carte de rang n + P, la face recto de la carte de rang n et la face verso de la carte de rang n + P étant séparées par une lame d'air d'épaisseur égale à P - 1 fois l'épaisseur du corps de carte.

Ainsi, aucun des modules électroniques ne se trouve en contact avec une quelconque face verso de la pluralité des cartes stockées, ce qui limite notablement l'altération des cartes due au dégazage de la colle des modules électroniques. L'effet d'altération sera d'autant plus diminué que le nombre P d'orientations est élevé.

Les cartes sont stockées en piles, conformément au procédé de l'invention, pendant toute la durée voulue jusqu'à supprimer tout risque de trace de dégazage. Il est alors extrêmement facile de les mettre dans la disposition convenable pour une opération ultérieure, emballage par exemple, en faisant pivoter la pluralité de cartes pour les amener en position d'empilement parfait. Cette manoeuvre prend très peu de temps et peut se faire manuellement sur l'ensemble de la pile.

Afin d'évacuer les vapeurs qui se forment au cours du dégazage de la colle, l'invention prévoit avantageursement qu'une ventilation forcée est produite dans ladite lame d'air séparant la face recto de la carte de rang n et la face verso de la carte de rang n + P.

La description qui va suivre en regard des dessins annexés, donnés à titre d'exemples non limitatifs, fera bien comprendre en quoi consiste l'invention et comment elle peut être réalisée.

La figure la est une vue de dessus d'un premier empilement de cartes à mémoire électronique stockées conformément au procédé selon l'invention.

La figure 1b est une vue de côté de l'empilement de la figure 1a.

La figure 2 est une vue de dessus d'un deuxième empilement de cartes à mémoire électronique stockées conformément au procédé de l'invention.

La figure 3 est une vue de dessus d'un troisième empilement de cartes à mémoire électronique stockées conformément au procédé selon l'invention.

La figure 4 est une vue de dessus d'un conteneur apte à recevoir un empilement de cartes conforme à la figure 2.

La figure 5 est une vue de dessus du conteneur de la figure 4 muni d'un dispositif de ventilation.

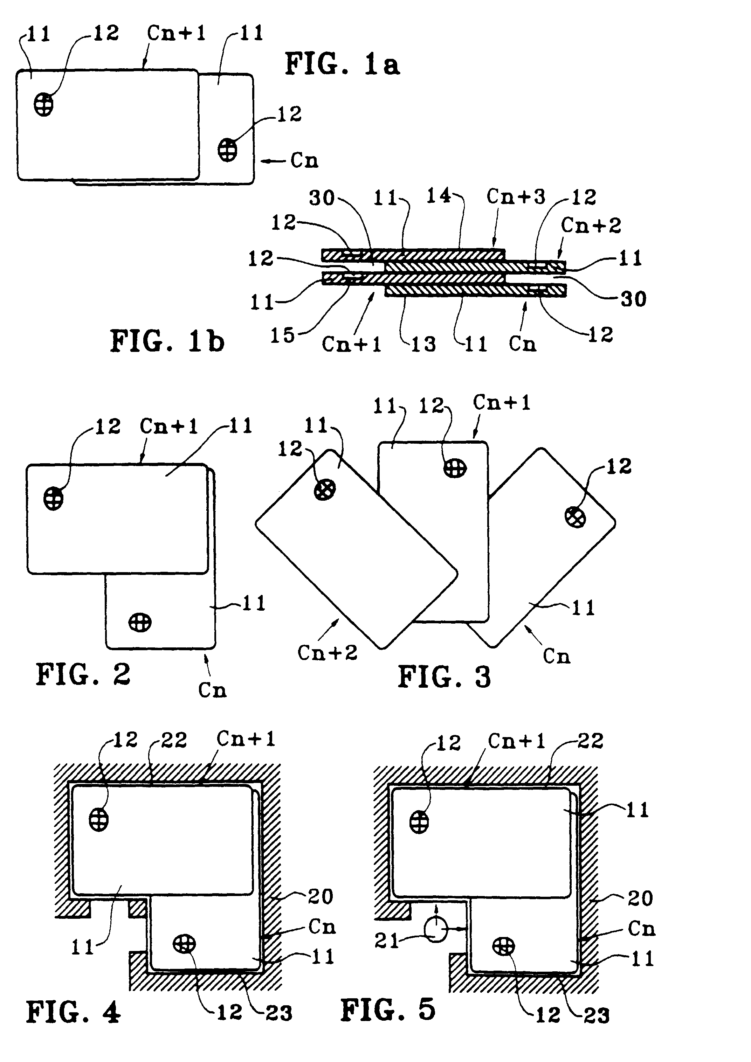

Les figures 1a et 1b montrent un empilement de cartes Cn, Cn+1, etc, à mémoire électronique comportant, chacune, un corps 11 de carte présentant une face recto 14 et une face verso 13. Sur la face recto 14 est aménagée une cavité 15 dans laquelle est disposé un module électronique 12 comprenant une pastille semi-conductrice, EEPROM ou microprocesseur selon le type de cartes, reliée à des contacts électriques extérieurs affleurant la face recto 14 du corps 11 de carte.

Le module électronique 12 est maintenu dans la cavité 15 à l'aide, par exemple, d'une colle cryanoacrylate.

Afin de limiter les effets néfastes du dégazage de la colle du module électronique 12 sur la face d'une carte voisine lorsque les cartes sont simplement superposées les unes sur les autres, il y a avantage, comme on peut le voir sur les figures 1a et 1b, à empiler les cartes consécutivement, ici alternativement, selon deux orientations différentes formant un angle de 180°. Dans cette configuration, dite "tête-bêche", les cartes sont parallèles mais de sens opposé. Plus précisément, les cartes Cn, Cn + 2, ..., de rang n, n + 2, ..., d'une part, et Cn +1, Cn + 3, ..., de rang n +1, n + 3, ..., d'autre part, occupent une position identique dans la pile de telle manière que le module électronique 12 de la carte de rang n par exemple soit placé en regard de la face verso 13 de la carte de rang n + 2, la face recto de la carte de rang n et la face verso de la carte de rang n+ 2 étant séparées par une lame 30 d'air d'épaisseur égale ici à une fois l'épaisseur du corps 11 de carte.
Sur la figure 2, les cartes sont empilées selon deux orientations différentes formant un angle de 90°, deux cartes successives Cn et Cn + 1 étant perpendiculaires l'une à l'autre dans une configuration dite "en ailettes". Dans ce type d'empilement la lame d'air séparant la face recto de la carte de rang n et la face verso de la carte de rang n + 2 est égale à l'épaisseur du corps 11 de la carte, comme pour l'empilement des figures 1a et 1b.

Bien entendu, le nombre P d'orientations différentes dans lesquelles les cartes sont réparties successivement n'est pas limité à P = 2. Dans l'exemple illustré à la figure 3, les cartes peuvent prendre P = 3 orientations différentes selon une disposition dite "en éventail". Dans ce cas, le module électronique 12 d'une carte de rang n est placé en regard de la face verso de la carte de rang n + 3, la face recto de la carte de rang n et la face verso de la carte de rang + 3 étant séparées par une lame d'air d'épaisseur égale à 2 fois l'épaisseur du corps 11 de carte. Il en résulte une augmentation de l'épaisseur de ladite lame qui facilite encore plus le dégazage.

Comme l'indiquent les figures 4 et 5, les cartes peuvent être maintenues dans un conteneur placé en sortie de la machine d'assemblage, et présentant P compartiments correspondant aux P orientations différentes des cartes. Le conteneur 20 des figures 4 et 5 comporte deux compartiments 22, 23 prévus pour recevoir des cartes empilées selon la configuration "en ailettes" de la figure 2.

Le dégazage peut être accéléré par une ventilation forcée produite dans la lame d'air séparant la face recto d'une carte de rang n et la face verso de la carte de rang n + 2 (n + P en général) à l'aide de buses 21 de ventilation montrées sur la figure 5.

Il peut également se révéler avantageux de stocker les piles de cartes en position horizontale. En effet, les vapeurs de dégazage s'écoulent ainsi plus facilement vers des zones où elles ne peuvent plus laisser de trace, compte tenu de leur densité différente de celle de l'air.

En conclusion, les avantages du procédé de stockage de l'invention sont les suivants :

Le risque de trace au dégazage est pratiquement supprimé, sans que cela induise une quelconque contrainte sur le mode de réalisation des cartes, le choix des matériaux (colle, vernis, etc) ou la vitesse de production.

Le temps de dégazage peut être aussi long qu'on le souhaite sans pour autant conduire à des immobilisations improductives d'équipement ou à des volumes trop importants.

Le procédé n'induit ni manipulation supplémentaire, ni augmentation des encombrements machines ou stockage.

Le procédé peut être utilisé lors d'étapes ultérieures de production.

## Revendications

1. Procédé de stockage d'une pluralité de cartes (Cn, Cn + 1, ...) à mémoire électronique comportant, chacune, d'une part, un corps (11) de carte présentant une face recto (14) et une face verso (13), et, d'autre part, un module électronique (12) disposé dans une cavité (15) aménagée sur la face recto (14) dudit corps (11) de carte, caractérisé en ce que ledit procédé consiste à empiler lesdites cartes consécutivement selon P orientations différentes, d'une manière telle que le module électronique (12) d'une carte de rang n soit placé en regard de la face verso de la carte de rang n + P, la face recto (14) de la carte de rang n et la face verso (13) de la carte de rang n + P étant séparées par une lame (30) d'air d'épaisseur égale à P-1 fois l'épaisseur du corps (11) de carte.

2. Procédé selon la revendication 1, caractérisé en ce que les cartes sont empilées consécutivement selon deux (P = 2) orientations différents formant un angle de 90°.

3. Procédé selon la revendication 1, caractérisé en ce que les cartes sont empilées consécutivement selon deux (P = 2) orientations différentes formant un angle de 180°.

4. Procédé selon la revendication 1, caractérisé en ce que les cartes sont empilées consécutivement selon trois (P = 3) orientations différentes.

5. Procédé selon l'une quelconque des revendications 1 à 4, caractérisé en ce que lesdites cartes sont maintenues dans un conteneur (20) présentant P compartiments (22, 23) correspondant aux P orientations différentes des cartes.

6. Procédé selon l'une quelconque des revendications 1 à 5, caractérisé en ce qu'une ventilation forcée (21) est produite dans ladite lame d'air séparant la face recto (14) de la carte de rang n et la face verso (13) de la carte de rang n + P.

## Patentansprüche

1. Verfahren zum Lagern von mehreren elektronischen Speicherkarten (Cn, Cn + 1, ...) umfassend jeweils einerseits einen eine Vorderseite (14) und eine Rückseite (13) aufweisenden Kartenkörper (11) und andererseits einen elektronischen Modul (12), der in einer auf der Vorderseite (14) des Kartenkörpers (11) angebrachten Vertiefung (15) angeordnet ist, dadurch gekennzeichnet, daß das Verfahren daraus besteht, daß die Karten nacheinander in P verschiedenen Orientierungen derart gestapelt werden, daß der elektronische Modul (12) einer Karte mit Rang n gegenüber der Rückseite der Karte mit Rang n + P angeordnet wird, wobei die Vorderseite (14) der Karte mit Rang n und die Rückseite (13) der Karte mit Rang n + P durch einen Luftspalt (30) mit einer Dicke, die gleich P-1 mal der Dicke des Kartenkörpers (11) ist, voneinander getrennt sind.

2. Verfahren nach Anspruch 1, dadurch gekennzeichnet, daß die Karten nacheinander in zwei verschiedenen Orientierungen (P=2), die einen Winkel von 90° bilden, gestapelt werden.

3. Verfahren nach Anspruch 1, dadurch gekennzeichnet, daß die Karten nacheinander in zwei verschiedenen Orientierungen (P=2), die einen Winkel von 180° bilden, gestapelt werden.

4. Verfahren nach Anspruch 1, dadurch gekennzeichnet, daß die Karten nacheinander in drei (P=3) verschiedenen Orientierungen gestapelt werden.

5. Verfahren nach einem der Ansprüche 1 bis 4, dadurch gekennzeichnet, daß die Karten in einem Behälter (20) gehalten werden, der P Fächer (22, 23) aufweist, die den P verschiedenen Orientierungen der Karten entsprechen.

6. Verfahren nach einem der Ansprüche 1 bis 5, dadurch gekennzeichnet, daß in dem Luftspalt, der die Vorderseite (14) der Karte mit Rang n von der Rückseite (13) der Karte mit Rang n + P trennt, eine Zwangsbelüftung (21) erzeugt wird.

## Claims

1. Method for storing a plurality of electronic smart cards each firstly comprising a card body having a front surface and a rear surface, and secondly an electronic module disposed in a cavity fitted on the front surface of said card body, wherein said method consists of stacking said cards consecutively according to P different orientations so that the electronic module of a card having rank n is placed opposite the rear surface of the card having rank n + P, the front surface of the card having rank n and the rear surface of the card having rank n + P being separated by an air space having a thickness equal to P-1 times the thickness of the card body.

2. Method according to claim 1, wherein the cards are stacked consecutively according to two (P=2) different orientations forming an angle of 90°.

3. Method according to claim 1, wherein the cards are stacked consecutively according to two (P=2) different orientations forming an angle of 180°.

4. Method according to claim 1, wherein the cards are stacked consecutively according to three (P=3) different orientations.

5. Method according to any one of claims 1 to 4, whereas said cards are kept in a container having P compartments corresponding to the P different orientations of the cards.

6. Method according to any one of claims 1 to 5, whereas a forced ventilation is produced in the air space separating the front surface of the card having rank n and the rear surface of the card having rank n + P.
